# EUROPÄISCHE PATENTSCHRIFT

(11) **EP 1 946 982 B1**
(45) Veröffentlichungstag und Bekanntmachung des Hinweises auf die Patenterteilung: **28.09.2011**
(21) Anmeldenummer: 08000641.4
(22) Anmeldetag: 15.01.2008
(51) Int. Cl.: B60S 1/52, B60S 1/60

(54) **Fluidausgabevorrichtung für eine Scheiben- oder Scheinwerferwaschanlage eines Fahrzeugs**
Fluid discharge device for a window or headlamp washing device of a vehicle
Dispositif d'émission de fluide pour une installation de nettoyage de vitre ou de phare de véhicule

(30) Priorität: 16.01.2007 DE 102007003092
(43) Veröffentlichungstag der Anmeldung: 23.07.2008
(73) Patentinhaber: Vola Plast GmbH & Co. KG, 34286 Spangenberg (DE)
(72) Erfinder:
(74) Vertreter: Walther, Walther & Hinz GbR

(56) Entgegenhaltungen:
- WO-A1-2005/100108
- DE-A1- 4 305 245
- DE-A1- 19 746 059
- DE-A1-102004 016 991

## Beschreibung

Die vorliegende Erfindung betrifft eine Fluidausgabevorrichtung gemäß dem Oberbegriff des Anspruches 1.

Bei Scheiben- oder Scheinwerferwaschanlagen eines Fahrzeuges wird mit Reinigungsmitteln und/oder Frostschutzmitteln versetztes Wasser (nachfolgend Fluid genannt) über Schläuche in eine Fluidausgabevorrichtung gepumpt und von dort auf die Windschutzscheibe, die Heckscheibe oder Scheinwerfer appliziert. Diese Fluidausgabevorrichtung wird mit einer entsprechenden Haltevorrichtung, z. B. an der Motorhaube des Fahrzeuges oder in Lüftungsgittern oder unterhalb der Scheibenwischer befestigt. Die Fluidausgabevorrichtung umfasst neben der Haltevorrichtung noch einen Korpus zur Fluidausgabe und mindestens einen Anschlussstutzen zum Anschließen einer Fluidleitung.

Aus der DE 197 46 059 A1 ist eine Scheibenwaschvorrichtung bekannt, deren Korpus schwenkbar in einer Haltevorrichtung gehalten ist, wobei in der Haltevorrichtung ein innengewinde ausgebildet ist zur Aufnahme einer Stellschraube. Diese Stellschraube besitzt an ihrem freien, aus dem Innengewinde herausragenden Ende einen Kugelkopf, der in eine entsprechende Aussparung am Korpus eingelassen ist. Durch Verstellen der Stellschraube kann nunmehr der Korpus gegenüber der Haltavorrichtung verschwenkt werden. Dabei sollte der Korpus so eingestellt werden, dass das aus dem Korpus austretende Fluid an die gewünschte Stelle auf der Windschutzscheibe, der Heckscheibe oder dem Scheinwerfer auftrifft, um eine optimale Verteilung des Fluids zu erreichen. Durch die Befestigung der Stellschraube mittels des Kugelkopfes in der Aussparung entstehen hohe Reibungskräfte, die ein Bewegen der Stellschraube und somit ein Verstellen des Korpus erschweren. Auch ist es durch die Anordnung der Stellschraube an einem Vorsprung nur schwer möglich, die Stellschraube zu erreichen, so auch hierdurch dass Verstellen des Korpus erschwert ist. Des Weiteren kann es vorkommen, dass bei einer Belastung der Stellschraube auf Zug der Kugelkopf aus seiner Halterung herausspringt mit der folge, dass dann gar keine Verstellung mehr möglich ist.

Aus der DE 43 05 245 A1 ist eine einstellbare Scheibenwaschvorrichtung bekannt, deren Einstellschraube über eine Grundplatte axialfest aber drehbar gehalten ist, während das Gewinde der Einstellschraube in ein hutförmiges Sackloch mit Innengewinde eingreift. Durch Verdrehen der Schraube werden die Bauteile gegeneinander verschwenkt.

Aus der DE 10 2004 016 991 A1 ist eine Einrichtung zur Reinigung einer Scheibe eines Kraftfahrzeuges bekannt, deren Korpus über zylindrische Halterungen In einem Halteelement verschwenkbar gehalten ist, wobei die Verschwenkung über eine Reihe von Vorsprüngen unter Zuhilfenahme eines externen Einstellwerkzeuges" erfolgt.

Die oben genannten Nachteile treten bei den beiden letztgenannten Schriften analog auf.

Davon ausgehend liegt der vorliegenden Erfindung die Aufgabe zu Grunde, eine Fluidausgabevorrichtung der eingangs genannten Art zu schaffen, mit der die Abstrahlrichtung des Fluids einfach und präzise eingestellt werden kann.

Als technische Lösung dieser Aufgabe wird erfindungsgemäß eine Fluidausgabevorrichtung mit den Merkmalen des Anspruches 1 vorgeschlagen. Vorteilhafte Weiterbildungen dieser Fluidausgabevorrichtung sind den Unteransprüchen zu entnehmen.

Eine nach dieser technischen Lehre ausgebildete Fluidausgabevorrichtung hat den Vorteil, dass die vorzugsweise in einem am Korpus oder am Anschlussstutzen angebrachte, röhrenförmige Halterung die Stellschraube direkt am Korpus oder am Anschlagstutzen hält, so dass eine direkte und damit einfache Übertragung der Schwenkkräfte von der Schraube auf den Korpus bzw. den Anschlussstutzen erreicht wird.

Ein weiterer Vorteil besteht darin, dass sich das aus der röhrenförmigen Halterung herausragende Ende der Stellschraube an einer an der Haltevorrichtung angebrachten Anschlagfläche abstützt, so dass auch hier eine einfache Übertragung der Kräfte auf die Haltevorrichtung erreicht wird und dass die beim Drehen der Einstellschraube ausgeübte Kraft über das Gewinde ein Verschieben der Halterung und somit ein Verschwenken des Korpus bewirkt, so dass ein stufenloses und sehr präzises Einstellen des Korpus möglich ist.

Ein weiterer Vorteil besteht darin, dass der durch die Einstellschraube eingestellte Korpus von der Einstellschraube in dieser Position gehalten wird. Dabei bewirken die auf die Einstellschraube wirkenden Kräfte eine erhöhte Reibung, unter anderem im Gewinde der Schraube und/oder an der Anschlagfläche, so dass ein selbstständiges und unbeabsichtigtes Verstellen der Schraube vermieden wird.

Durch die Anordnung der Stellschraube direkt am Korpus wird außerdem der Vorteil erzielt, dass die Einstellschraube leicht zugänglich ist und somit leicht verstellt werden kann.

In einer anderen, bevorzugten Ausführungsform ist an der Haltevorrichtung eine Rückstellfläche vorgesehen, an der insbesondere der Kopf der Stellschraube zur Anlage kommt. Dies hat den Vorteil, dass beispielsweise beim Zurückdrehen der Stellschraube der Kopf der Stellschraube an dieser Rückstellfläche zur Anlage kommt und somit den Anschlussstutzen und/ oder den Korpus gegenüber der Haltevorrichtung in die entgegengesetzte Richtung schwenkt, so dass durch die Stellschraube der Korpus auch in die entgegengesetzte Richtung bewegt werden kann. Folglich kann mit einer einzigen Stellschraube der Korpus in beide Richtungen verschwenkt werden. Auch hier fixiert die Stellschraube den Korpus in der einmal eingestellten Position, da auch hier auf die Stellschraube Kräfte ausgeübt werden, so dass ein unbeabsichtigtes Verdrehen der Stellschrauben vermieden wird.

In einer bevorzugten Weiterbildung ist zwischen der Anschlagfläche und der Rückstellfläche der Haltevorrichtung ein Verbindungssteg vorgesehen, der die Anschlagfläche mit der Rückstellfläche verbindet. Hierdurch erhält die Haltevorrichtung eine höhere Stabilität, und ein unerwünschtes Verbiegen der Anschlag- und/oder der Rückstellfläche wird somit vermieden. Gleichzeitig ist es hierdurch möglich, die Materialstärke der Haltevorrichtung zu reduzieren, was zu einer Kostenersparnis führt.

In noch einer bevorzugten Ausführungsform ist die Stellschraube spielfrei zwischen der Anschlagfläche und der Rückstellfläche gehalten. Die hat den Vorteil, dass somit eine Bewegung der Stellschraube vermieden wird und dass beim Drehen der Stellschraube lediglich die Halterung und damit der Korpus bewegt werden.

In einer weiteren, bevorzugten Ausführungsform der Erfindung sind links und rechts vom Korpus abstehende Zapfen vorgesehen, welche in entsprechende Aufnahmen an der Haltevorrichtung eingreifen. Mittels dieser Zapfen wird der Korpus schwenkbar in der Haltevorrichtung, insbesondere in den Aufnahmen der Haltevorrichtung gehalten, so dass das Verschwenken des Korpus gegenüber der Haltevorrichtung ohne großen Kraftaufwand möglich ist.

In einer anderen, bevorzugten Ausführungsform sind zwei miteinander fluchtende Anschlussstutzen vorgesehen, die sich im Bereich des Korpus miteinander verbinden, wobei der Korpus auf den beiden Anschlussstutzen befestigt ist. Die Anschlussstutzen greifen in entsprechende Aufnahmen der Haltevorrichtung ein, so dass auch hier der auf den Anschlussstutzen befestigte Korpus in einer Weise gegenüber der Haltevorrichtung geschwenkt werden kann.

In einer bevorzugten Weiterbildung hat es sich als vorteilhaft erwiesen, die Aufnahmen derart auszugestalten, dass diese die Zapfen und/oder die Anschlussstutzen um mehr als 180° umgreifen. Hierdurch wird der Korpus formschlüssig an der Haltevorrichtung gehalten, so dass ein unbeabsichtigtes Herausrutschen aus der Haltevorrichtung vermieden wird.

Ein weiterer Vorteil der Fluidausgabevorrichtung besteht darin, dass hierbei der Korpus zusammen mit dem mindestens einen Anschlussstutzen als ein erstes Bauteil, und die Haltevorrichtung als ein zweites Bauteil ausgeführt ist. Durch diese separierte Herstellungsweise können die jeweils notwendigen Werkzeuge sehr viel einfacher konstruiert werden, was zu einer Reduzierung der Herstellungskosten führt. Auch ist es hierbei denkbar, unterschiedliche Materialien zu verwenden, um den jeweiligen Einsatzanforderungen gerecht zu werden.

Weitere Vorteile der erfindungsgemäßen Fluidausgabevorrichtung ergeben sich aus der beigefügten Zeichnung und den nachstehend beschriebenen Ausführungsformen. Ebenso können die vorstehend genannten und die noch weiter ausgeführten Merkmale erfindungsgemäß jeweils einzeln oder in beliebigen Kombinationen miteinander verwendet werden. Die erwähnten Ausführungsformen sind nicht als abschließende Aufzählung zu verstehen, sondern haben vielmehr beispielhaften Charakter. Es zeigen:

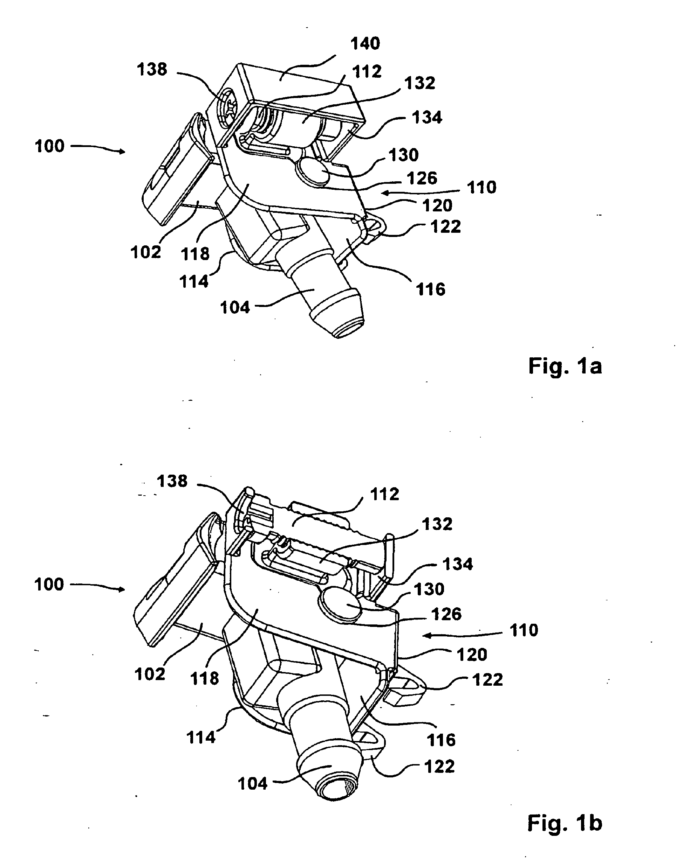

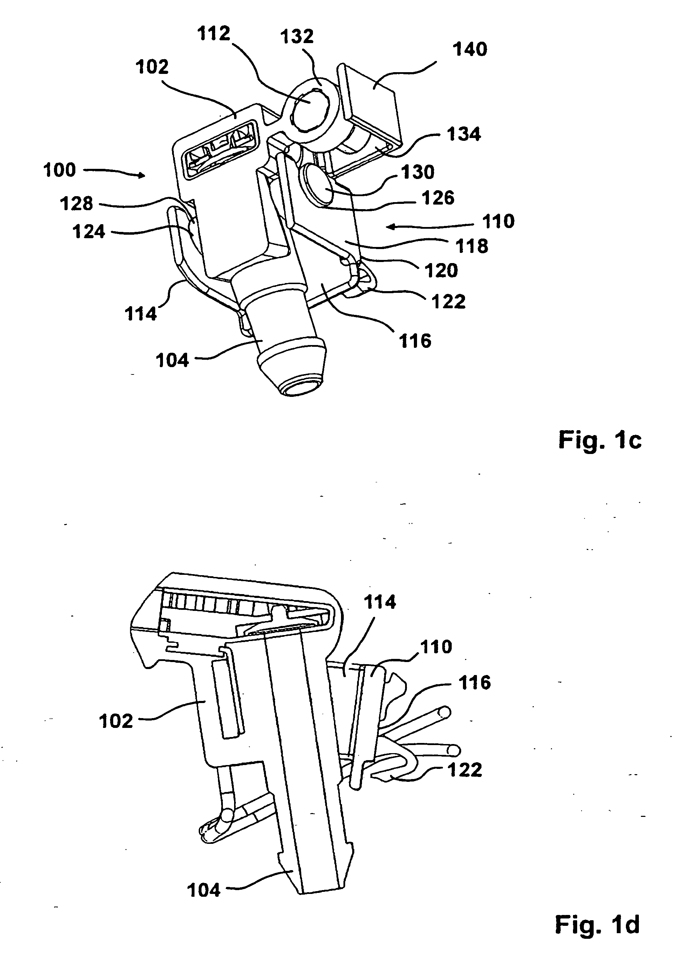

- Fig. 1 a: eine perspektivische Ansicht einer ersten Ausführungsform einer erfindungsgemäßen Fluidausgabevorrichtung;
- Fig. 1 b: eine perspektivische Ansicht der Fluidausgabevorrichtung gemäß Fig. 1a, geschnitten entlang Linie Ib - Ib in Fig. 1a;
- Fig. 1 c: eine perspektivische Ansicht der Fluidausgabevorrichtung gemäß Fig. 1a, geschnitten entlang Linie Ic - Ic in Fig. 1a;
- Fig. 1 d: eine Seitenansicht der Fluidausgabevorrichtung gemäß Fig. 1a, geschnitten entlang Linie Id - Id in Fig. 1a;
- Fig. 2a: eine perspektivische Ansicht einer zweiten Ausführungsform einer erfindungsgemäßen Fluidausgabevorrichtung;
- Fig. 2b: eine perspektivische Ansicht der Fluidausgabevorrichtung gemäß Fig. 2a, geschnitten entlang Linie IIb - IIb in Fig. 2a;
- Fig. 2c: eine perspektivische Ansicht der Fluidausgabevorrichtung gemäß Fig. 2a, geschnitten entlang Linie IIc - IIc in Fig. 2a;
- Fig. 2d: eine Seitenansicht der Fluidausgabevorrichtung gemäß Fig. 2a, geschnitten entlang Linie IId - IId in Fig. 2a;
- Fig. 3a: eine perspektivische Ansicht einer dritten Ausführungsform einer erfindungsgemäßen Fluidausgabevorrichtung;
- Fig. 3b: eine perspektivische Ansicht der Fluidausgabevorrichtung gemäß Fig. 3a, geschnitten entlang Linie IIIb - IIIb in Fig. 3a;
- Fig. 3c: eine perspektivische Ansicht der Fluidausgabevorrichtung gemäß Fig. 3a, geschnitten entlang Linie IIIc - IIIc in Fig. 3a;
- Fig. 3d: eine Seitenansicht der Fluidausgabevorrichtung gemäß Fig. 3a, geschnitten entlang Linie IIId - IIId in Fig. 3a.

In den Fig. 1a bis 1d ist eine erste Ausführungsform einer erfindungsgemäßen Fluidausgabevorrichtung 100 in diversen Ansichten und Schnitten dargestellt. Diese Fluidausgabevorrichtung setzt sich aus drei Bauteilen zusammen. Dies ist zum einen ein Korpus 102 zur Fluidausgabe, an dem einstückig ein Anschlussstutzen 104 angeformt ist. Durch diesen Anschlussstutzen 104 wird aus einer hier nicht dargestellten Fluidleitung das Fluid in den Korpus geführt und mittels einer hier nicht näher dargestellten Düse auf die Windschutzscheibe, die Heckscheibe oder den Scheinwerfer eines Fahrzeuges appliziert. Die Fluidausgabevorrichtung 100 umfasst weiterhin eine Haltevorrichtung 110 und eine Stellschraube 112.

Die Haltevorrichtung 110 besitzt einen drei Schenkel 114, 116 und 118 aufweisenden Rahmen 120, wobei die drei Schenkel 114, 116 und 118 im Wesentlichen U-förmig zueinander angeordnet sind. Am mittleren Schenkel 116 sind rückwärtig zwei Schnappelemente 122 angeformt, mit denen die Fluidausgabevorrichtung 100 beispielsweise an einer Motorhaube eines Fahrzeuges angeklemmt werden kann.

In einer anderen, hier nicht dargestellten Ausführungsform sind statt der Schnappelemente Rast- oder Klemmelemente vorgesehen, um die Fluidausgabevorrichtung 100 an anderen Teilen des Fahrzeuges anzubringen.

Die seitlichen Schenkel 114 und 118 weisen je eine kreisförmige Aufnahme 124, 126 auf, in die je ein vom Korpus 102 abstehender Zapfen 128, 130 eingreift. Dabei umgreift die Aufnahme 124, 126 den Zapfen 128, 130 mehr als 180°, um so eine formschlüssige Verbindung zwischen der Haltevorrichtung 110 und dem Korpus 102 herzustellen. Die Zapfen 128, 130 - Aufnahme 124, 126 -Verbindung ist als Presspassung ausgeführt, so dass zwar ein Verschwenken des Korpus 102 gegenüber der Haltevorrichtung 110 möglich ist, dass hierfür jedoch ein gewisser Kraftaufwand notwendig ist. Durch diese Presspassung wird erreicht, dass der Korpus 102 gegenüber der Haltevorrichtung 110 grundsätzlich in der einmal eingestellten Position verharrt, sofern keine äußeren Einflüsse auf die Bauteile einwirken.

An einer Seite des Korpus 102 ist einstückig eine röhrenförmige Halterung 132 angeformt, in der ein Innengewinde ausgebildet ist. In dieser Halterung 132 befindet sich die Stellschraube 112. Dabei ist die Halterung 132 so kurz ausgebildet, dass ein freies Ende der Stellschraube 112 stets aus der Halterung 132 hinausragt.

Am seitlichen Schenkel 118 ist eine Anschlagfläche 134 und eine Rückstellfläche 136 ausgebildet, die senkrecht zum seitlichen Schenkel 118 ausgerichtet sind. Dabei reicht die Anschlagfläche 134 derart über die Stellschraube 112 hinaus, dass die Stellschraube 112 an der Anschlagfläche 134 zur Anlage kommt. Auf der anderen Seite, d. h. im Bereich des Kopfes der Stellschraube 112, befindet sich die Rückstellfläche 136 ebenfalls so, dass die Stellschraube 112 an der Rückstellfläche 136 zur Anlage kommt. In der Rückstellfläche 136 ist eine Öffnung 138 vorgesehen, so dass man mit einem entsprechenden Werkzeug an die Stellschraube 112 herankommt, um diese zu verdrehen.

Die Außenseite der Anschlagfläche 134 ist über einen Verbindungssteg 140 mit der Außenseite der Rückstellfläche 136 verbunden. Hierdurch entsteht eine stabile Konstruktion, so dass beim Betätigen der Stellschraube 112 weder die Anschlagfläche 134, noch die Rückstellfläche 136 in unangemessener Weise verbogen wird. Vielmehr wird hierdurch erreicht, dass die durch die Stellschraube 112 auf die Haltevorrichtung 110 wirkenden Kräfte auch ordnungsgemäß übertragen werden. Durch die spielfreie Anordnung der Stellschraube 112 zwischen der Anschlagfläche 134 und der Rückstellfläche 136 wird eine Bewegung der Stellschraube 112 verhindert, so dass die beim Drehen der Stellschraube 112 aufgebrachte Kraft unmittelbar zu einem Schwenken des Korpus 102 führt.

Nachfolgend wird der Einstellvorgang der Fluidausgabevorrichtung detaillierter erläutert:

Nachdem die Fluidausgabevorrichtung am Fahrzeug angebracht ist, zeigt der Korpus 102, z. B. auf die Windschutzscheibe. Für ein gutes Waschergebnis der Windschutzscheibe ist es aber erforderlich, dass der aus dem Korpus austretende Fluidstrahl auf die gewünschte Stelle der Windschutzscheibe auftrifft. Hierzu muss der Korpus entsprechend eingestellt werden. Gegebenenfalls muss die Einstellung nach einiger Zeit korrigiert werden. Hierzu führt der Bediener einen Schraubendreher durch die Öffnung 138 in der Rückstellfläche 136 bis in die Stellschraube 112. Durch Drehen der Stellschraube 112 im Uhrzeigersinn bewegt sich die Stellschraube 112 in Richtung der Anschlagfläche 134. Da die Anschlagfläche 134 nicht ausweichen kann, wird durch Drehen der Stellschraube 112 die Halterung 132 und damit der Korpus 102 von der Anschlagfläche 134 wegbewegt. Weil der Korpus 102 über die Zapfen 128, 130 schwenkbar in der Haltevorrichtung 110 gehalten ist, schwenkt der Korpus 102 nun um die virtuelle Zapfenachse, so dass sich dessen Position gegenüber der Windschutzscheibe verändert.

Wird die Stellschraube 112 entgegen dem Uhrzeigersinn gedreht, so bewegt sich die Halterung 132 und somit auch die Korpus 102 in die entgegengesetzte Richtung.

Die Stellschraube 112 ist so dimensioniert, dass diese spielfrei zwischen der Anschlagfläche 134 und der Rückstellfläche 136 angeordnet ist. Hierdurch wird gewährleistet, dass weder die Stellschraube 112, noch die Halterung 134 und auch nicht der Korpus 102 in unerwünschter Weise bewegt werden. Vielmehr wird hierdurch der Korpus 102 in der einmal eingestellten Position dauerhaft gehalten.

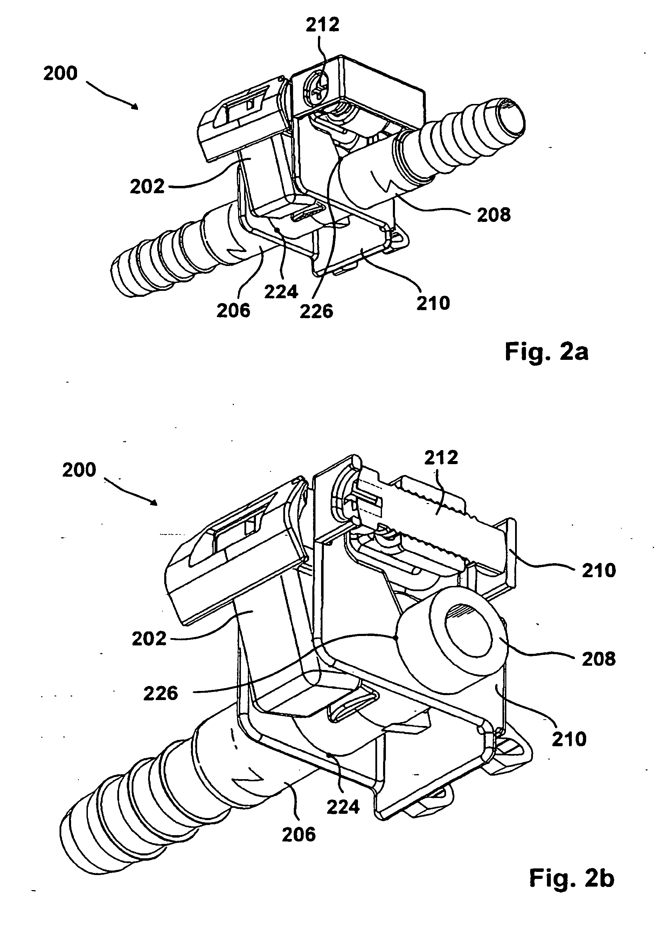

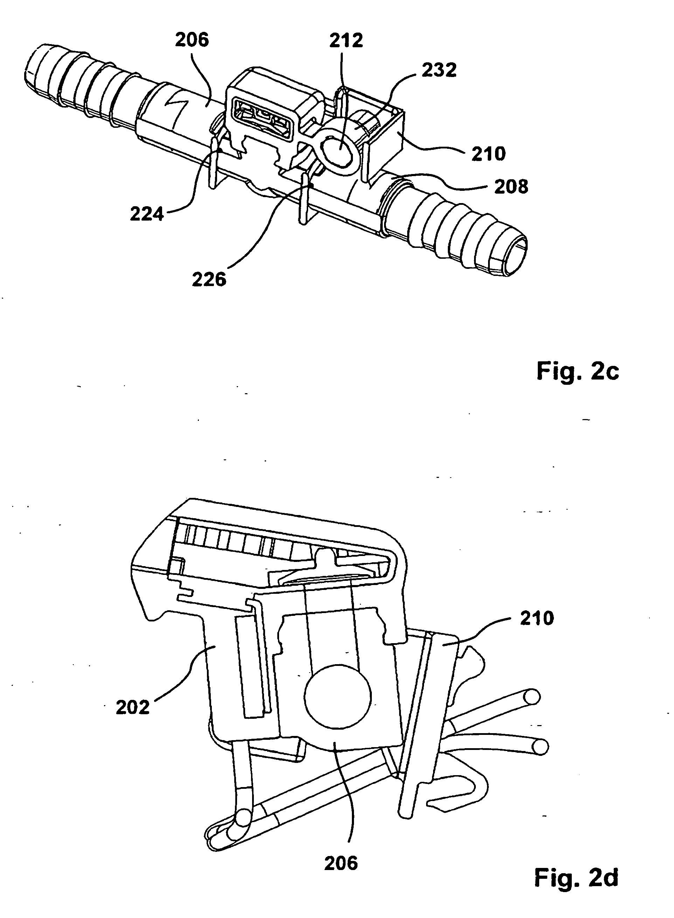

In der in Figuren 2a bis 2d dargestellten zweiten Ausführungsform ist der Korpus 202, die Stellschraube 212 und die Haltevorrichtung 210 im Wesentlichen so ausgebildet, wie in der ersten Ausführungsform gemäß den Fig. 1 a bis 1 d. Der Unterschied zwischen diesen beiden Ausführungsformen besteht in den Anschlussstutzen. In dieser zweiten Ausführungsform sind zwei Anschlussstutzen 206, 208 vorgesehen, die miteinander fluchtend ausgerichtet sind. Beide Anschlussstutzen 206, 208 münden ineinander und sind einstückig mit dem Korpus 202 verbunden. Diese Anschlussstutzen 206, 208 sind außenseitig im Wesentlichen kreisrund ausgebildet und greifen (wie die Zapfen 128, 130 der ersten Ausführungsform) in entsprechende Aufnahme 224, 226 der Haltevorrichtung 210 ein. Auch hier sind die Anschlussstutzen 206, 208 mittels Presspassung in den Aufnahmen 224, 226 gehalten. Hierin wird auf die Beschreibung zur ersten Ausführungsform verwiesen.

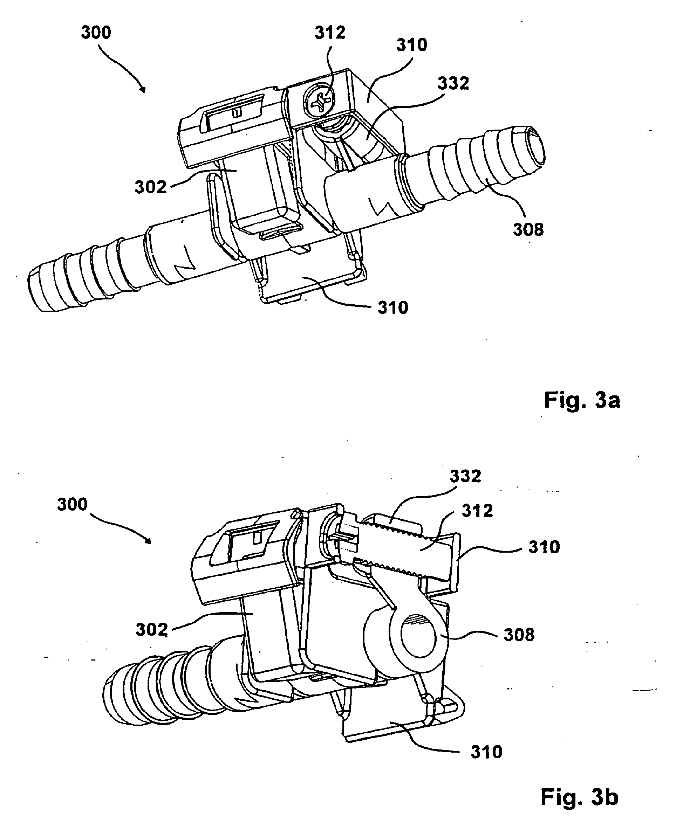

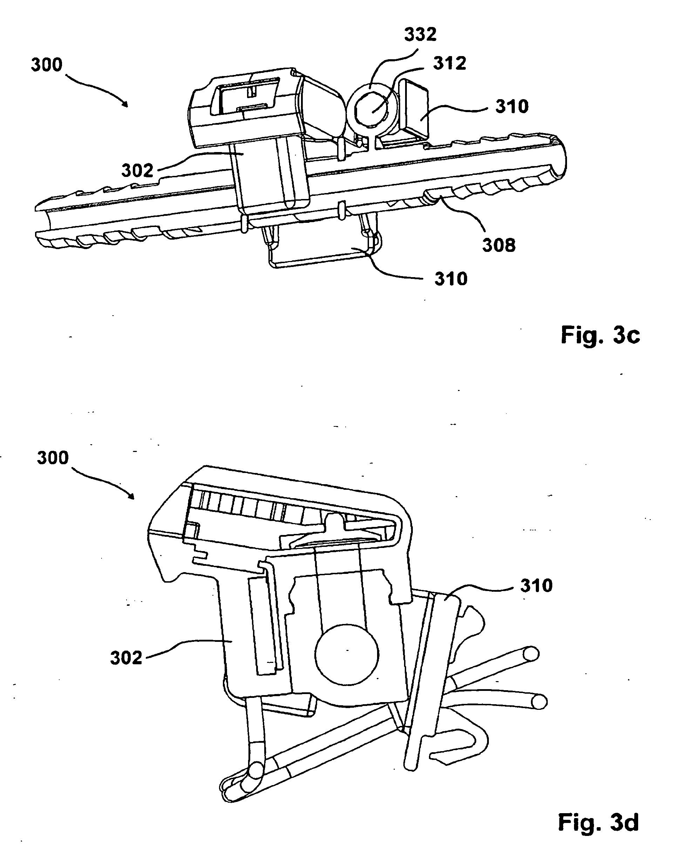

In der in den Fig. 3a bis 3d dargestellten dritten Ausführungsform ist die Halterung 332 nicht am Korpus 302, sondern am Anschlussstutzen 308 einstückig angebracht. Im Übrigen entspricht diese Ausführungsform der in Zusammenhang mit den Fig. 2a bis 2d beschriebenen zweiten Ausführungsform, so dass hier auf die Beschreibung zu der ersten und zweiten Ausführungsform verwiesen wird.

Durch die Anbringung der Halterung 332 am Anschlussstutzen 308 wird bei Betätigen der Stellschrauben 312 über den Anschlussstutzen 308 auch der Korpus 302 verschwenkt, da die Haltevorrichtung 310 fest am Fahrzeug montiert ist.

### Bezugszeichenliste:

- 100 200 300: Fluidausgabevorrichtung
- 102 202 302: Korpus
- 104: Anschlussstutzen
- 206: Anschlussstutzen
- 208 308: Anschlussstutzen
- 110 210 310: Haltevorrichtung
- 112 212 312: Stellschraube
- 114: Schenkel
- 116: Schenkel
- 118: Schenkel
- 120: Rahmen
- 122: Schnappelemente
- 124 224: Aufnahme
- 126 226: Aufnahme
- 128: Zapfen
- 130: Zapfen
- 132 332: Halterung
- 134: Anschlagfläche
- 136: Rückstellfläche
- 138: Öffnung
- 140: Verbindungssteg

## Patentansprüche

1. Fluidausgabevorrichtung für eine Scheiben- oder Scheinwerferwaschanlage eines Fahrzeuges umfassend einen Korpus (102, 202, 302) zur Fluidausgabe, eine Haltevorrichtung (110, 210, 310) zur Anbringung der Fluidausgabevorrichtung am Fahrzeug und mindestens einen Anschlussstutzen (104, 206, 208, 308) zum Anschließen einer Fluidleitung, wobei der Korpus (102, 202, 302) gegenüber der Haltevorrichtung (110, 210, 310) schwenkbar gehalten ist,
wobei am Korpus (102, 202) oder am Anschlussstutzen (308) eine Stellvorrichtung angebracht ist, mittels der der Korpus (102, 202, 302) gegenüber der Haltevorrichtung (110, 210, 310) verschwenkt werden kann und die den Korpus (102, 202, 302) gegenüber der Haltevorrichtung (110, 210, 310) in der gewünschten Position hält und
wobei die Stellvorrichtung als Stellschraube (112, 212, 312) ausgebildet ist,
**dadurch gekennzeichnet,**
**dass** am Korpus (102, 202) oder am Anschlussstutzen (308) eine röhrenförmige Halterung (132, 332) mit Innengewinde angebracht ist, in der die Stellschraube (112, 212, 312) derart schraubbar gehalten ist, dass ein freies Ende der Stellschraube (112, 212, 312) aus der Halterung (132, 332) herausragt, dass an der Haltevorrichtung (110, 210, 310) eine Anschlagfläche (134) vorgesehen ist, an der die Stellvorrichtung anliegt

2. Fluidausgabevorrichtung nach Anspruch 1,
**dadurch gekennzeichnet,**
**dass** die Stellvorrichtung mit dem freien Ende der Stellschraube (112, 212, 312) an der Anschlagfläche (134) anliegt.

3. Fluidausgabevorrichtung nach einem der vorangehenden Ansprüche,
**dadurch gekennzeichnet,**
**dass** an der Haltevorrichtung (110, 210, 310) eine Rückstellfläche (136) vorgesehen ist, an der die Stellvorrichtung, insbesondere der Kopf der Stellschraube (112, 212, 312), anliegt.

4. Fluidausgabevorrichtung nach den Ansprüchen 2 und 3,
**dadurch gekennzeichnet,**
**dass** die Stellschraube (112, 212, 312) spielfrei zwischen der Anschlagfläche (134) und der Rückstellfläche (136) gehalten ist.

5. Fluidausgabevorrichtung nach den Ansprüchen 2 bis 4,
**dadurch gekennzeichnet,**
**dass** die Anschlagfläche (134) und die Rückstellfläche (136) der Haltevorrichtung (110, 210, 310) über einen Verbindungssteg (140) miteinander verbunden sind.

6. Fluidausgabevorrichtung nach einem der vorangehenden Ansprüche,
**dadurch gekennzeichnet,**
**dass** rechts und links vom Korpus (102) je ein abstehender Zapfen (128, 130) vorgesehen ist, welche in entsprechende Aufnahmen (124, 126) an der Haltevorrichtung (110) eingreifen.

7. Fluidausgabevorrichtung nach einem der vorangehenden Ansprüche,
**dadurch gekennzeichnet,**
**dass** zwei miteinander fluchtende Anschlussstutzen (206, 208, 308) vorgesehen sind, an denen der Korpus (202, 302) befestigt ist, wobei die Anschlussstutzen (206, 208, 308) in entsprechenden Aufnahmen (224, 226) an der Haltevorrichtung (210, 310) eingreifen.

8. Fluidausgabevorrichtung nach einem der Ansprüche 6 oder 7,
**dadurch gekennzeichnet,**
**dass** die Aufnahme (124, 126, 224, 226) den Zapfen (128, 130) oder den Anschlussstutzen (206, 208) um mehr als 180° umgreift.

## Claims

1. A fluid discharge device for a window or head lamp washing device of a vehicle, including a body (102, 202, 302) for fluid distribution, a holding apparatus (110, 210, 310) for attaching said fluid distributing apparatus to the vehicle and at least one connecting tubing (104, 206, 208, 308) for connecting a fluid line, said body (102, 202, 302) being retained for pivotal movement with respect to said holding apparatus (110, 210, 310),
an adjusting apparatus being attached to said body (102, 202) or to said connecting tubing (308) for pivotal movement of said body (102, 202, 302) with respect to said holding apparatus (110, 210, 310) and for retaining said body (102, 202, 302) in the desired position with respect to said holding apparatus (110, 210, 310) and
said adjusting apparatus being configured to be a set screw (112, 212, 312),
**characterized in**
**that** a tubular retaining fixture (132, 332) having an internal thread is attached to said body (102, 202) or to said connecting tubing (308), said set screw (112, 212, 312) being adapted to be screwed in such a manner into said retaining fixture that one free end of the set screw (112, 212, 312) protrudes from said retaining fixture (132, 332), that an abutment surface (134) for abutment of the adjusting apparatus is provided on the holding apparatus (110, 210, 310).

2. The fluid discharge device as set forth in claim 1,
**characterized in**
**that** the adjusting apparatus abuts the abutment surface (134) with the free end of the set screw (112, 212, 312).

3. The fluid discharge device as set forth in any one of the afore mentioned claims,
**characterized in**
**that** a return surface (136) for the adjusting apparatus, more specifically for the head of the set screw (112, 212, 312), to abut, is provided on the holding apparatus (110, 210, 310).

4. The fluid discharge device as set forth in the claims 2 and 3 ,
**characterized in**
**that** the set screw (112, 212, 312) is retained with a zero clearance fit between the abutment surface (134) and the return surface (136).

5. The fluid discharge device as set forth in the claims 2 through 4,
**characterized in**
**that** the abutment surface (134) and the return surface (136) of the holding apparatus (110, 210, 310) are joined together through a connecting web (140).

6. The fluid discharge device as set forth in any one of the afore mentioned claims,
**characterized in**
**that** on the left and on the right side of the body (102) there is respectively provided a projecting pin (128, 130) for engagement into mating receiving recesses (124, 126) provided on the holding apparatus (110).

7. The fluid discharge device as set forth in any one of the afore mentioned claims,
**characterized in**
**that** two aligned connecting tubings (206, 208, 308) to which the body (202, 302) is fastened are provided, said connecting tubings (206, 208, 308) engaging mating receiving recesses (224, 226) provided on the holding apparatus (210, 310).

8. The fluid discharge device as set forth in any one of the claims 6 or 7,
**characterized in**
**that** the receiving recess (124, 126, 224, 226) surrounds more than 180° of the perimeter of the pin (128, 130) or of the connecting tubing (206, 208).

## Revendications

1. Dispositif d'émission de fluide pour une installation de nettoyage de vitre ou de phare de véhicule, du type comprenant un corps (102, 202, 302) d'émission du fluide, un dispositif de retenue (110, 210, 310) pour monter le dispositif d'émission de fluide sur le véhicule et au moins une tubulure de raccordement (104, 206, 208, 308) pour raccorder un conduit de fluide, le corps (102, 202, 302) étant maintenu mobile en pivotement par rapport au dispositif de retenue (110,210,310),
un dispositif de réglage au moyen duquel le corps (102, 202, 302) est pivotable par rapport au dispositif de retenue (110, 210, 310) et qui maintient dans la position souhaitée le corps (102, 202, 302) par rapport au dispositif de retenue (110, 210, 310) étant fixé sur le corps (102, 202) ou sur la tubulure de raccordement (308), le dispositif de réglage étant réalisé sous forme de vis de réglage (112, 212,312),
**caractérisé en ce**
**qu'**une fixation tubulaire (132, 332) avec taraudage est montée sur le corps (102, 202) ou sur la tubulure de raccordement (308), la vis de réglage (112, 212, 312) étant maintenue, apte à être vissée, dans cette fixation de manière à ce qu'une extrémité libre de la vis de réglage (112, 212, 312) fasse saillie hors de la fixation (132, 332), qu'une surface de butée (134) contre laquelle le dispositif de réglage vient en appui soit prévue sur le dispositif de retenue (110, 210, 310).

2. Dispositif d'émission de fluide selon la revendication 1,
**caractérisé en ce**
**que** le dispositif de réglage est en appui contre la surface de butée (134) par l'extrémité libre de la vis de réglage (112, 212, 312).

3. Dispositif d'émission de fluide selon l'une quelconque des revendications précédentes,
**caractérisé en ce**
**qu'**une surface de rappel (136) contre laquelle le dispositif de réglage, notamment la tête de la vis de réglage (112, 212, 312), est en appui est prévue sur le dispositif de retenue (110, 210, 310).

4. Dispositif d'émission de fluide selon les revendications 2 et 3,
**caractérisé en ce**
**que** la vis de réglage (112, 212, 312) est retenue sans jeu entre la surface de butée (134) et la surface de rappel (136).

5. Dispositif d'émission de fluide selon les revendications 2 à 4,
**caractérisé en ce**
**que** la surface de butée (134) et la surface de rappel (136) du dispositif de retenue (110, 210, 310) sont reliées ensemble par l'intermédiaire d'une entretoise de liaison (140).

6. Dispositif d'émission de fluide selon l'une quelconque des revendications précédentes,
**caractérisé en ce**
**qu'**un doigt (128, 130) en saillie est prévu respectivement à droite et à gauche du corps (102), ces doigts s'engageant dans des logements (124, 126) correspondants prévus sur le dispositif de retenue (110).

7. Dispositif d'émission de fluide selon l'une quelconque des revendications précédentes,
**caractérisé en ce**
**que** deux tubulures de raccordement (206, 208, 308) alignées sur lesquelles est fixé le corps (202, 302) sont prévues, les tubulures de raccordement (206, 208, 308) s'engageant dans des logements correspondants (224, 226) sur le dispositif de retenue (210, 310).

8. Dispositif d'émission de fluide selon les revendications 6 ou 7,
**caractérisé en ce**
**que** le logement (124, 126, 224, 226) entoure le doigt (128, 130) ou la tubulure de raccordement (206, 208) sur plus de 180°.
